Europäisches Patentamt

European Patent Office

Office européen des brevets

(11) Veröffentlichungsnummer: **0 339 236**
**A2**

## (12) EUROPÄISCHE PATENTANMELDUNG

(21) Anmeldenummer: **89104598.1**

(22) Anmeldetag: **15.03.89**

(51) Int. Cl.⁴: **B29C 45/14** , **B29C 45/16**

(30) Priorität: **26.04.88 DE 3813993**

(43) Veröffentlichungstag der Anmeldung:
**02.11.89 Patentblatt 89/44**

(84) Benannte Vertragsstaaten:
**ES FR GB IT**

(71) Anmelder: **Klöckner Ferromatik Desma GmbH**
**Riegeler Strasse 4**
**D-7831 Malterdingen(DE)**

(72) Erfinder: **Pröll, Manfred**
**Am alten Mühlenberg 4**
**D-2807 Achim-Baden(DE)**

(74) Vertreter: **Kiefer, Winfried, Dipl.-Phys.**
**Klöckner-Werke Aktiengesellschaft**
**Patentabteilung Klöcknerstrasse 29**
**D-4100 Duisburg 1(DE)**

(54) **Verfahren und Vorrichtung zum Herstellen von Schuhsohlen aus thermoplastischem Material und zum Anformen an Schuhschäfte.**

(57) Beim Anformen von Schuhsohlen aus thermoplastischem Material an Schuhschäfte, wobei die Schuhsohlen jeweils eine Laufsohle und eine geschäumte Zwischensohle aufweisen, wird während eines ersten Spritztaktes eine Laufsohle gespritzt und an einen Schuhschaft ein Sohlenrahmen angespritzt und in einem zweiten Spritztakt zwischen die Laufsohle, den Schuhschaft und den an den Schuhschaft angespritzten Sohlenrahmen die Zwischensohle gespritzt. Falls die Laufsohle in Felder unterteilt ist, wird der erste Spritztakt in mindestens zwei Stufen unterteilt, während der ersten Stufe werden die einen Felder und während der zweiten Stufe die anderen Felder gespritzt. Die Vorrichtung weist mindestens einen Leisten für die aufzuziehen Schuhschäfte, eine Schwenkeinrichtung mit zwei Bodenstempeln, mindestens einen Gegenstempel und mindestens zwei Seitenformteile auf, wobei unter den Seitenformteilen zwei weitere Seitenformteile verschiebbar geführt sind. Während des ersten Spritztaktes begrenzen die Seitenformteile mit einem aufgezogenen Schuhschaft und einem ersten Bodenstempel den Formenhohlraum für den Sohlenrahmen, sowie der zweite Bodenstempel mit dem Gegenstempel den Formenhohlraum für die Laufsohle. Während des zweiten Spritztaktes begrenzen der aufgeleistete Schaft, der Sohlenrahmen, die weiteren Seitenformteile und die Laufsohle den Formenhohlraum für die Zwischensohle.

## Verfahren und Vorrichtung zum Herstellen von Schuhsohlen aus thermoplastischem Material und zum Anformen an Schuhschäfte

Die Erfindung betrifft ein Verfahren zum Anformen von Schuhsohlen aus thermoplastischem Material an Schuhschäfte, wobei die Schuhsohlen jeweils eine Laufsohle und eine geschäumte Zwischensohle aufweisen, sowie Vorrichtungen zum Durchführen der Verfahren.

Schuhe mit an die Schuhschäfte angeformten Schuhsohlen aus thermoplastischem Material weisen im allgemeinen eine abriebfeste Laufsohle und weiterhin eine zwischen der Laufsohle und dem Schuhschaft angeordnete Zwischensohle aus geschäumtem Material mit hoher Elastizität jedoch geringer Abriebfestigkeit auf.

Zum Anformen der Schuhsohlen kommen im allgemeinen Rundtischanlagen zum Einsatz, die mehrere Arbeitsstationen mit Formen aufweisen.

Die Formen bestehen im Prinzip jeweils aus zwei Seitenformteilen, einem Bodenstempel, einem Gegenstempel und einem Leisten, wenn zunächst die Zwischensohle und anschließend die Laufsohle geformt wird.

Zum Formen der Laufsohle begrenzen die Seitenformteile, der Bodenstempel und der Gegenstempel einen Formenhohlraum, dessen Volumen dem Volumen der zu bildenden Laufsohle entspricht. Die beiden Seitenformteile begrenzen in ihrer Schließstellung einen Angußkanal, über den das plastifizierte thermoplastische Material zur Bildung der Laufsohle eingespritzt wird. Anschließend wird der Gegenstempel entfernt und auf die Seitenformteile der Leisten mit einem aufgezogenen Schuhschaft unter Bildung des Formenhohlraums für die Zwischensohle aufgesetzt, wobei beim Entfernen des Gegenstempels eine weitere Angußbohrung freigegeben wird, über die das plastifizierte Material für die Zwischensohle unter Aufschäumen und Bilden der Zwischensohle eingespritzt wird.

Es ist auch prinzipiell möglich, zunächst die Zwischensohle und anschließend die Laufsohle zu spritzen, indem zunächst in den von den Seitenformteilen, dem Bodenstempel und dem mit einem aufgezogenen Schaft auf den Seitenformteilen aufgesetzten Leisten gebildeten Zwischenraum das Material für die Zwischensohle über eine ebenfalls von den beiden Seitenformteilen begrenzte Angußbohrung eingespritzt wird, nach Bilden der Zwischensohle wird der Bodenstempel unter Bildung eines weiteren Formenhohlraums abgesenkt und über eine weitere vom Bodenstempel freigegebene Angußbohrung wird das Material für die Laufsohle eingespritzt.

Es ist weiterhin bekannt, DE-OS 36 00 682, beim Formen von Sohlen, die eine Laufsohle aus einem Elastomer und eine Zwischensohle aus einem zu Polyurethan ausreagierenden Gemisch aus Isocyanat und Polyol aufweisen, Formen einzusetzen, die mindestens einen Leisten für aufzuziehende Schuhschäfte, weiterhin eine Schwenkeinrichtung mit zwei Bodenstempeln, sowie einen Gegenstempel und zwei Seitenformteile aufweisen. In diesem Falle sind auf einem sogenannten Leistendrehkopf zwei Leisten angeordnet.

Die Bodenstempel der Schwenkeinrichtung arbeiten in aufeinanderfolgenden Arbeitstakten jeweils mit einer Spritzgießform zum Herstellen einer Laufsohle zusammen, wobei einer der Bodenstempel mit einer auf ihm befindlichen Laufsohle mit den Seitenformteilen und dem aufgeleisteten Schaft den Formenhohlraum zum Formen der Zwischensohle bildet. Derartige Formen kommen insbesondere zum Formen von Schuhsohlen mit einer Elastomer-Laufsohle und einer geschäumten Polyurethan-Zwischensohle zum Einsatz.

Die bekannten Lederschuhe mit einer Brandsohle und mit einer Laufsohle als Leder weisen im allgemeinen einen über den Schaftboden seitlich vorstehenden in sich geschlossenen Rand mit einem aufgeklebten bzw. aufgenähten, ebenfalls in sich geschlossenen Sohlenrahmen auf.

Dieser in sich geschlossene Sohlenrahmen hat bei Lederschuhen eine ästhetische Funktion und weist beispielsweise bei sportlich aussehenden Schuhen eine Doppelnaht auf.

Schuhe mit angespritzten Schuhsohlen aus thermoplastischem Material neigen zu Scherbewegungen des Schuhschaftes gegenüber der Laufsohle, die durch die geringe Seitenstabilität der geschäumten Zwischensohle verursacht werden, die bei sehr weichem Zwischensohlenmaterial ein "schwammiges" Gehen zur Folge hat.

Es zeigte sich überraschenderweise, daß bei solchen Schuhen diese Seitenstabilität erheblich verbessert werden kann, wenn die Schuhschäfte einen in sich geschlossenen Sohlenrahmen aufweisen.

Der Erfindung liegt deshalb die Aufgabe zugrunde, ein Verfahren zum Anformen von Schuhsohlen aus thermoplastischem Material an Schuhschäfte, wobei die Schuhsohlen jeweils eine Laufsohle und eine geschäumte Zwischensohle aufweisen, zur Verbesserung der Seitenstabilität der Schuhe zu schaffen.

Diese Aufgabe wird erfindungsgemäß dadurch gelöst, daß während eines ersten Spritztaktes eine Laufsohle gespritzt und an einen Schuhschaft ein in sich geschlossener Sohlenrahmen angespritzt wird und daß in einem zweiten Spritztakt zwischen die Laufsohle, den Schuhschaft und den an den Schuhschaft angespritzten Sohlenrahmen die Zwischensohle gespritzt wird

Es zeigte sich überraschenderweise, daß hierdurch die Seitenstabilität des Schuhs erheblich verbessert ist. Für den Sohlenrahmen wird zum Beispiel ein biegesteifes plastifizierbares thermoplastisches Material, wie z.B. 70 - 75 ° Shore, verwendet, so daß der Schuhschaft im Bereich zur Sohle eine biegesteife elastische Einfassung hat, die wie der Boden bzw. die Brandsohle des Schuhschaftes ebenfalls mit der geschäumten Zwischensohle verbunden ist. Da die Kontur der angrenzenden Fläche des Sohlenrahmens und der Unterseite des Schaftes verschieden ist von der Kontur der an die Zwischensohle angrenzenden Fläche der Laufsohle wird vermutlich ein seitenstabiler Verbund geschaffen.

Prinzipiell kann die Laufsohle als durchgehende Sohle gespritzt werden.

Es ist weiterhin möglich, die Laufsohle so auszubilden, daß sie in mehrere Felder unterteilt ist. Zu diesem Zwecke wird in einer weiteren Ausgestaltung der Erfindung zum Spritzen einer in Felder unterteilten Laufsohle der erste Spritztakt in mindestens zwei Stufen unterteilt, wobei während der ersten Stufe die einen Felder und während der zweiten Stufe die anderen Felder gespritzt werden, jeweils durch einen dafür bestimmten Angußkanal. Im allgemeinen wird so verfahren, daß in der zweiten Stufe der in sich geschlossene Sohlenrahmen an den Schuhschaft angespritzt wird, so daß am Ende des ersten Spritztaktes das plastifizierte thermoplastische Material in den Formenhohlraum für die Laufsohle und in den Formenhohlraum für den in sich geschlossenen Sohlenrahmen eingespritzt ist, so daß in der Laufsohle und im Sohlenrahmen im gleichen Maße die chemischen Reaktionen ablaufen und problemlos die Zwischensohle gespritzt und mit der Laufsohle, sowie dem Rahmen und dem Schaft verbunden wird.

Für den Fall, daß die Laufsohle eine durchgehende Sohle, d.h. nicht in Felder unterteilt ist, kommt eine Vorrichtung mit mindestens einem Leisten für die aufzuziehenden Schuhschäfte, mit einer Schwenkeinrichtung mit zwei Bodenstempeln, mit mindestens einem Gegenstempel und mindestens zwei Seitenformteilen zum Einsatz, die erfindungsgemäß dadurch gekennzeichnet ist, daß auf den Seitenformteilen zwei weitere Seitenformteile verschiebbar geführt sind, während des ersten Spritztaktes die Seitenformteile mit einem aufgezogenen Schuhschaft und mit einem ersten Bodenstempel den Formenhohlraum für den in sich geschlossenen Sohlenrahmen begrenzen, sowie der zweite Bodenstempel mit dem Gegenstempel den Formenhohlraum für die Laufsohle begrenzen, und daß während des zweiten Spritztaktes der aufgeleistete Schaft, der in sich geschlossene Sohlenrahmen, die weiteren Seitenformteile und die Laufsohle den Formenhohlraum für die Zwischensohle begrenzen.

In einer weiteren Ausgestaltung der Erfindung kommt in dem Falle, daß die Laufsohle in mehrere Felder unterteilt ist, eine Vorrichtung mit mindestens einem Leisten für die aufzuziehenden Schuhschäfte, mit einer Schwenkeinrichtung mit zwei Bodenstempeln, mit mindestens einem Gegenstempel und mindestens zwei Seitenformteilen zum Einsatz, die dadurch gekennzeichnet ist, daß auf den Seitenformteilen zwei weitere Seitenformteile verschiebbar geführt sind, die Vorrichtung einen zweiten Gegenstempel aufweist, während der ersten Stufe des ersten Spritztaktes der zweite Bodenstempel mit dem ersten Gegenstempel die Formenhohlräume für die einen Felder der Laufsohle und während der zweiten Stufe mit dem zweiten Gegenstempel die Formenhohlräume für die anderen Felder der Laufsohle begrenzt, während der zweiten Stufe die Seitenformteile mit einem Schuhschaft und mit einem ersten Bodenstempel den Formenhohlraum für den Sohlenrahmen begrenzt und während des zweiten Spritztaktes der aufgeleistete Schuhschaft, der Sohlenrahmen und die Laufsohle und die weiteren Seitenformteile den Formenhohlraum für die Zwischensohle begrenzen.

In einer weiteren Ausgestaltung der Erfindung sind beide Gegenstempel auf einer Verschiebeeinrichtung angeordnet.

Die Erfindung ist anhand von Ausführungsbeispielen in der Zeichnung näher erläutert.

Es zeigen:

Figur 1 und 2 schematisch eine Stirnansicht einer Formenstation einer Rundtischanlage in Richtung auf die Achse des Rundtisches zum Formen einer Sohle mit einer durchgehenden Laufsohle in den beiden Spritztakten,

Figur 3 und 4 schematisch eine Stirnansicht einer in Felder unterteilten Laufsohle in den beiden Stufen.

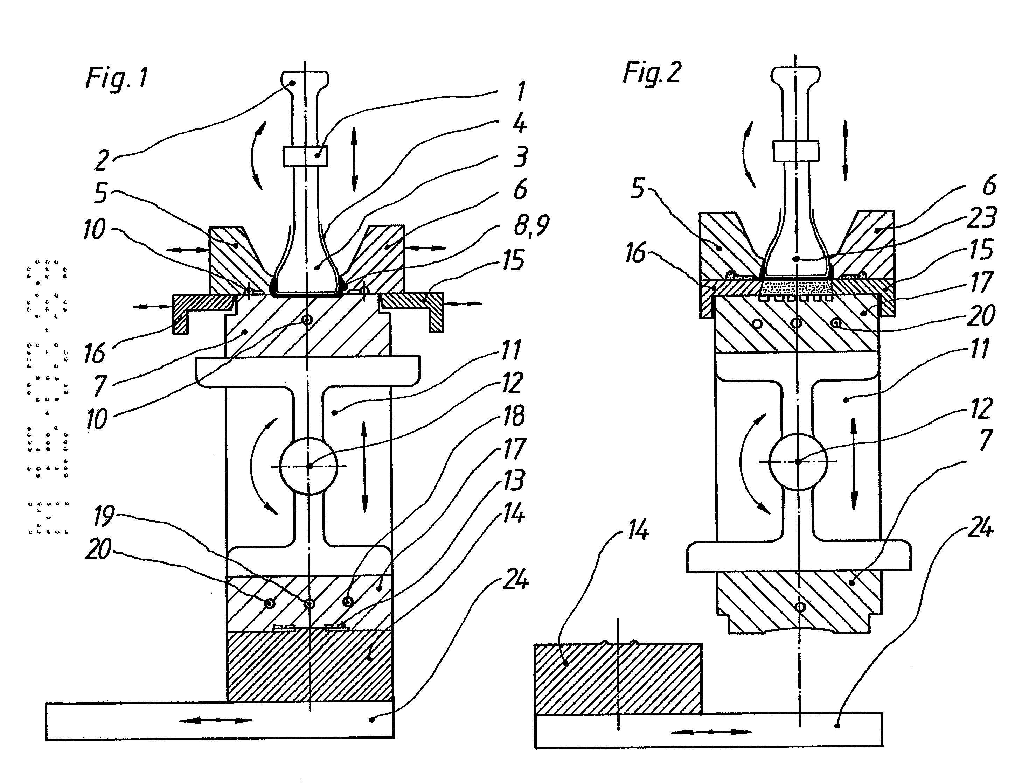

Die Figuren 1 und 2 zeigen schematisch eine Stirnansicht einer Formenstation (im Ausschnitt dargestellt) einer nicht dargestellten Rundtischanlage in Richtung auf die vertikale Achse des Rundtisches zum Formen einer Sohle mit einer durchgehenden Laufsohle.

Mit 1 ist der Leistendrehkopf bezeichnet, der die beiden Leisten 2 und 3 aufweist, wobei auf dem Leisten 3 ein Schuhschaft 4 aufgezogen ist, während von dem Leisten 2 ein fertiger Schuh bereits entleistet worden ist.

Der Leistendrehkopf ist um seine Achse verschwenkbar und in der Höhe verstellbar. Die Leisten arbeiten in der Stellung des Leistens 3, nachdem ein Schuhschaft 4 aufgezogen worden ist, mit den beiden Seitenformteilen 5 und 6 und einem ersten Bodenstempel 7 mit dem Anguß 10 zusammen zum Formen und zum Anformen an den Schuhschaft eines in sich geschlossenen Sohlenrahmens 9, wobei die Seitenformteile 5, 6 in ihrer Schließstellung dargestellt sind und der in sich geschlossene Schuhrahmen in Figur 2 mit 9 bezeichnet ist.

Zu diesem Zweck begrenzen die Seitenformteile 5 und 6 und der Bodenstempel 7 die Angußbohrungen 10, über die in den Formenhohlraum 8 (Nest) das plastifizierte thermoplastische Material für den biegesteifen in sich geschlossenen Sohlenrahmen 9 gespritzt wird.

Der erste Bodenstempel 7 ist auf einer Schwenkeinrichtung 11 angeordnet, die in einer Formenstation integriert ist und damit ein Teil der Rundtischanlage ist. Die Schwenkeinrichtung ist um ihre Achse 12 in beide Richtungen verschwenkbar und höhenverstellbar. Die Schwenkeinrichtung weist diametral gegenüber dem ersten Bodenstempel 7 einen zweiten Bodenstempel 17 mit einem Nest 13 auf, der in der in Figur 1 dargestellten Stellung gegen einen Gegenstempel 14 ansteht, der nach beiden Richtungen horizontal verschiebbar ist. Zu dem Formnest 13 führen Angußbohrungen 18, 19 und 20 im Bodenstempel 17. Über die Angußbohrung 18, 19 und 20 wird plastifiziertes Material zum Bilden der Laufsohle eingespritzt. Die beiden Seitenformteile 5 und 6 sind auf den beiden weiteren Seitenformteilen 15 und 16 in beiden Richtungen verschiebbar, die ebenfalls in beiden Richtungen verschiebbar sind, wie dies durch die Doppelpfeile schematisch dargestellt ist.

Nach Formen des in sich geschlossenen Sohlenrahmens 9 an den Schuhschaft 4 und nach Formen der Laufsohle werden die beiden weiteren Seitenformteile 15 und 16 aus der in Figur 1 ersichtlichen Offenstellung in die Schließstellung verfahren. Anschließend wird die Schwenkeinrichtung 11 in der Zeichenebene nach unten verfahren und verschwenkt, so daß, wie aus Figur 2 ersichtlich, der erste Bodenstempel 7 nach unten zeigt, während der zweite Bodenstempel 17 mit der in dem Formennest 13 befindlichen Laufsohle in Richtung zum Schuhschaft 4 zeigt. Anschließend wird die Schwenkeinrichtung hochgefahren, wobei dann die Seitenformteile 15 und 16 in die aus Figur 2 ersichtliche Schließstellung verfahren werden und über die Angußbohrung 23 das plastifizierte und aufschäumende Material in die durch den Schaft, und in den in sich geschlossenen Rand, die beiden weiteren Seitenformteile 15 und 16 sowie den zweiten Bodenstempel 17 gebildeten Formenhohlraum mit plastifiziertem Material unter Bildung der Zwischensohle injiziert wird.

Nach dem Verfestigen der Schuhsohle werden die Seitenformteile 5 und 6, die weiteren Seitenformteile 15 und 16, die Schwenkeinrichtung und der Leistendrehkopf in ihre Offenstellung verfahren. Die Schwenkeinrichtung und der Leistendrehkopf werden verschwenkt, so daß der Bodenstempel 17 wieder gegen den Gegenstempel 14 und der Leisten 3 in die Stellung des Leistens 2 in Figur 1 verschwenkt ist.

Anschließend werden die Seitenformteile 5, 6 sowie die weiteren Seitenformteile 15 und 16 in ihre Schließstellung und der Gegenstempel 14 aus einer aus Figur 2 ersichtlichen Position in seine aus Figur 1 ersichtliche Positiion (Arbeitsstellung) zum erneuten Formen eines in sich geschlossenen Sohlenrahmens und einer weiteren Zwischensohle gebracht.

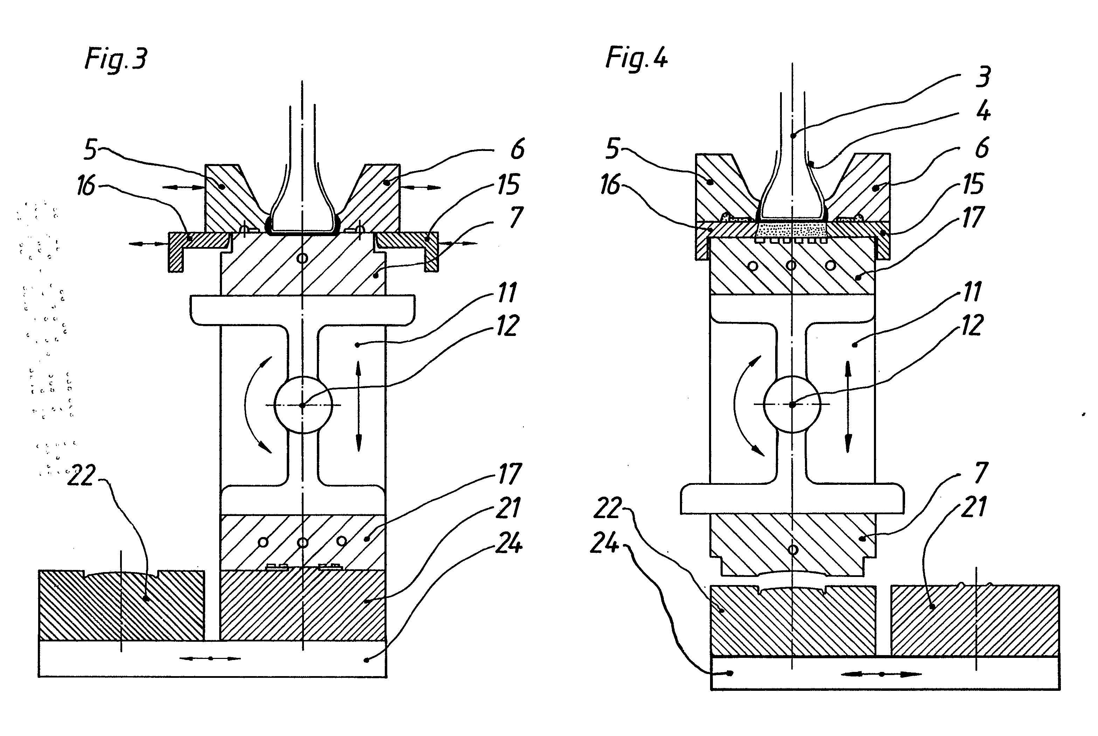

Die Figuren 3 und 4 zeigen ebenfalls schematisch in einer Stirnansicht in Richtung auf die Achse einer nicht dargestellten Rundtischanlage eine Formenstation, die zum Formen von in Feldern unterteilte Laufsohlen ausgebildet ist, wobei die einen Felder in der ersten Stufe und die anderen Felder in der zweiten Stufe des ersten Spritztaktes gespritzt werden, so daß am Ende des ersten Spritztaktes die in Felder unterteilte Laufsohle und der in sich geschlossene Sohlenrahmen geformt sind.

Die mit den Figuren 1 und 2 gleichen Teile der Figuren 3 und 4 sind mit den gleichen Bezugszeichen beziffert.

In Abwandlung der Figuren 1 und 2 weist die in den Figuren 3 und 4 dargestellte Formenstation zwei Gegenstempel auf, die mit 21 und 22 bezeichnet sind. Die Schwenkeinrichtung 11 weist in Abwandlung der Figur 1 bzw. 2 einen Bodenstempel auf, der im ersten Spritztakt mit dem Gegenstempel 21 und im zweiten Spritztakt mit dem Gegenstempel 22 zusammenarbeitet, wobei während des ersten Spritztaktes die Formnester für die einen Felder und im zweiten Spritztakt die Formnester für die anderen Felder der Laufsohle gebildet werden. Im ersten Spritztakt wird zum Beispiel durch den Anguß 19 ein Feld gefüllt. Beim zweiten Spritztakt kann durch den Anguß 18 ein zweites Feld und durch den Anguß 20 ein drittes Feld gefüllt werden. Es können aber auch andere Kombinationen vorgenommen werden. Nach dem Herstellen dieser voneinander. unabhängigen Felder der Laufsohle wird der Gegenstempel 21 durch den Gegenstempel 22 ersetzt. Die Entnahme des fertigen Schuhs bzw. das Verschwenken des Boden- und Gegenstempels erfolgt in entsprechender Weise wie anhand der Figuren 1 und 2 beschrieben.

Die beiden Gegenstempel sind auf einer Verschiebeeinrichtung 24 angeordnet.

Bezugszeichenliste

1 Leistendrehkopf
2 Leisten ohne Schaft und Schuh

3 Leisten mit Schaft

4 Schaft

5 Seitenformteil

6 Seitenformteil

7 Bodenstempel für Sohlenrahmen bzw. Schaftsohle

8 Nest für Sohlenrahmen

9 Sohlenrahmen

10 Anguß für Sohlenrahmen

11 Schwenkeinrichtung

12 Achse der Schwenkeinrichtung

13 Formennest Laufsohle

14 Gegenstempel

15 Seitenformteil

16 Seitenformteil

17 Bodenstempel

18 Anguß für Sohlenfeld

19 Anguß für Sohlenfeld

20 Anguß für Sohlenfeld

21 Gegenstempel

22 Gegenstempel

23 Anguß für Zwischensohle, in der Trennebene der Seitenformteile

24 Verschiebeeinrichtung


**Ansprüche**

1. Verfahren zum Anformen von Schuhsohlen aus thermoplastischem Material an Schuhschäfte, wobei die Schuhsohlen jeweils eine Laufsohle und eine geschäumte Zwischensohle aufweisen, dadurch gekennzeichnet, daß während eines ersten Spritztaktes eine Laufsohle gespritzt und an einen Schuhschaft ein Sohlenrahmen angespritzt wird und daß in einem zweiten Spritztakt zwischen die Laufsohle, den Schuhschaft und den an den Schuhschaft angespritzten Sohlenrahmen die Zwischensohle gespritzt wird.

2. Verfahren nach Anspruch 1, dadurch gekennzeichnet, daß zum Spritzen einer in Felder unterteilten Laufsohle der erste Spritztakt in mindestens zwei Stufen unterteilt wird und daß während der ersten Stufe die einen Felder und während der zweiten Stufe die anderen Felder gespritzt werden.

3. Vorrichtung zum Durchführen des Verfahrens nach Anspruch 1, mit mindestens einem Leisten für die aufzuziehenden Schuhschäfte, mit einer Schwenkeinrichtung mit zwei Bodenstempeln, mit mindestens einem Gegenstempel und mindestens zwei Seitenformteilen, dadurch gekennzeichnet, daß unter den Seitenformteilen (6, 5) zwei weitere Seitenformteile (15, 16) verschiebbar geführt sind, während des ersten Spritztaktes die Seitenformteile (6, 5) mit einem aufgezogenen Schuhschaft (4) und einem ersten Bodenstempel (7) den Formenhohlraum für den Sohlenrahmen (9) begrenzen, sowie der zweite Bodenstempel (17) mit dem Gegenstempel (14) den Formenhohlraum (13) für die Laufsohle begrenzen und daß während des zweiten Spritztaktes der aufgeleistete Schaft, der Sohlenrahmen, die weiteren Seitenformteile (15, 16) und die Laufsohle den Formenhohlraum für die Zwischensohle begrenzen.

4. Vorrichtung zum Durchführen des Verfahrens nach Anspruch 2, mit mindestens einem Leisten für die aufzuziehenden Schuhschäfte, mit einer Schwenkeinrichtung mit zwei Bodenstempeln, mit mindestens einem Gegenstempel und mindestens zwei Seitenformteilen, dadurch gekennzeichnet, daß auf den Seitenformteilen (6, 5) zwei weitere Seitenformteile (15, 16) verschiebbar geführt sind und die Vorrichtung einen zweiten Gegenstempel (22) aufweist, während der ersten Stufe des ersten Spritztaktes der zweite Bodenstempel (17) mit dem ersten Gegenstempel (21) die Formenhohlräume für die einen Felder der Laufsohle und während der zweiten Stufe mit dem zweiten Gegenstempel (22) die Formenhohlräume für die anderen Felder der Laufsohle begrenzt, während der zweiten Stufe die Seitenformteile (6, 5) mit einem aufgezogenen Schuhschaft (4) und einem ersten Bodenstempel (7) den Formenhohlraum für den Sohlenrahmen (9) begrenzt und während des zweiten Spritztaktes der aufgeleistete Schuhschaft der Sohlenrahmen und die Laufsohle und die weiteren Seitenformteile (15, 16) den Formenhohlraum für die Zwischensohle begrenzen.

5. Vorrichtung nach Anspruch 4, dadurch gekennzeichnet, daß die beiden Gegenstempel auf einer Verschiebeeinrichtung (24) angeordnet sind.

Fig.1

Fig.2

EP 0 339 236 A2

Fig.3

Fig.4

EP 0 339 236 A2